# EUROPEAN PATENT SPECIFICATION

(11) **EP 4 128 548 B1**
(45) Date of publication and mention of the grant of the patent: **31.01.2024**
(21) Application number: 20772266.1
(22) Date of filing: 15.09.2020
(51) Int. Cl.: H04B 1/56, H04B 1/40

(54) **ANTENNA ARRAY GROUPING**
GRUPPENANTENNENGRUPPIERUNG
GROUPEMENT D'ANTENNES RÉSEAU

(30) Priority: 02.04.2020 US 202063004224 P
(43) Date of publication of application: 08.02.2023
(73) Proprietor: Telefonaktiebolaget LM ERICSSON (PUBL), 16483 Stockholm (SE)
(72) Inventor: TILLMAN, Fredrik, 222 40 Lund (SE); ANDERSSON, Stefan, 247 97 Flyinge (SE)
(74) Representative: Ericsson
(86) International application number: PCT/EP2020/075677
(87) International publication number: WO 2021/197645

(56) References cited:
- EP-A2- 3 300 173
- US-A1- 2017 229 775
- US-A1- 2018 269 919
- US-A1- 2018 269 948
- US-B2- 7 839 334

## Description

### TECHNICAL FIELD

This disclosure relates to wireless communications and in particular to a method and system for antenna array grouping.

### BACKGROUND

In wireless communication systems today, groups of antennas are used to increase the effective antenna aperture of a radio used in wireless communications. Such communication systems include New Radio (NR) (also known as 5G) and Long Term Evolution (LTE) (also known as 4G). Increasing the effective aperture increases the antenna directivity. Increasing antenna directivity helps to overcome isotropic free space path loss. The receive (RX) and transmit (TX) functionality is usually orthogonalized using either the time domain (time division duplex, TDD), or the frequency domain (frequency division duplex, FDD). In both cases, the momentary spectrum efficiency is halved compared to using shared time and frequency resources for both reception and transmission. Such a system is usually referred to as an on-frequency, full-duplex system. Such systems present self-interference. This is the case because a transmitter will leak unwanted signal power into a nearby receiver. This leakage can be significantly stronger than the wanted receive signal power level, and thus, the leakage degrades the receiver sensitivity by several orders of magnitude.

On-frequency, full-duplex systems make use of several techniques that when combined, achieve substantial suppression of the unwanted, self-induced, transmit interferer in the receiver. In practice, three approaches may be exercised in parallel. These include: 1) antenna port isolation in terms of physically separating antennas and/or using separate polarizations, and/or using isolator/circulator functionality for cases where the antenna is shared for transmission and reception; 2) analog cancelation loops from the transmitter to the receiver in order to suppress the unwanted interferer to a level where receiver nonlinearity does not degrade performance beyond what is acceptable; and 3) cancellation in the digital baseband where remaining transmit leakage can be cancelled, and where modeled transmit nonlinearities can be taken into account. Depending on system requirements, one or possibly two of the aforementioned techniques may be omitted, but for high performing cellular systems, usually demanding upwards of 100dB of total transmit interferer suppression, all three approaches are typically fully exploited.

An antenna array includes multiple antenna elements, each with its own feed. By adjusting the phase between elements (or sub-arrays), an antenna array can be steered electronically, without having to physically move the antenna system. For multiple input multiple output (MIMO) systems using group antennas, one inherent problem is that multiple transmitters will simultaneously induce self-interference in each receiver. Thus, the complexity of self-cancellation grows. For large antenna arrays having multiple transceiver (receiver and transmitter) integrated circuits (ICs), (also referred to as "tiles") to drive the antenna ports, additional problems occur as analog cancellation paths between transmitters and receivers might call for analog inter-chip signaling, including radio frequency (RF) signaling. This, in turn, may complicate manufacture of the array beyond what is feasible. Such systems might need to rely only on antenna isolation techniques and digital cancellation. As a result, completely separated antenna panels (RX and TX) may be used. This has three potentially negative side effects when driven by individual radio ICs: 1) a large distance between antenna panels makes the total footprint large; 2) using a common transceiver IC for cost reasons means that either TX or RX will not be used so that unused chip area is expected; and 3) using separate transceiver ICs drives research and development, validation, and production cost as two ICs must be developed, and their respective volume is half the total volume. Circulators can only remove leakage from a transmitter to a receiver connected to the same circulator. Leakage from a nearby antenna cannot be distinguished from the wanted signal to be received by the antenna.

US 2018/269919 A1 show full duplex transceivers aiming at reducing offending coupling between a transmitter and a receiver in the same transceiver by utilizing at least one dummy antenna row. US 2018/269948 A1 relates to hierarchically elaborated phased-array antenna modules that provide an efficient way of disseminate the phase shift control information to a substantial number of phase shifters. US 2017/229775 A1 shows a scalable planar phased array antenna subarray tile assembly having a high fidelity phased array antenna performance, without excessive manufacturing cost.

### SUMMARY

The invention is defined in the independent claims. Advantageous embodiments are set out in the dependent claims.

Some embodiments advantageously provide a method and system for antenna array grouping to address the problems described above. In some embodiments, antenna elements in a group of antenna elements are arranged to reduce self-interference leakage. In some embodiments, TX and RX circuits are interleaved in the group antenna to avoid the above-described interference, while preserving good isolation between TX and RX antenna elements when operated in on-frequency full-duplex mode. In some embodiments, the antenna elements are arranged such that the nearest interfering TX antenna elements are connected to the same radio IC as the victim RX antenna elements in order to enable on-chip analog cancelation techniques. This is accomplished while using the same radio IC, i.e., tile, for all sub-arrays across the panel, but the geometry is alternated in order to effectively create more TX to RX isolation when antenna elements are connected to different radio ICs.

In some embodiments, a transmit and receive antenna array panel are interleaved into a joint antenna array structure where the physical interleaving is shaped to enable on-chip analog self-interference cancellation methods for the most significant TX aggressors. In an on-frequency full-duplex use case, this enables additional suppression without sacrificing total antenna area or antenna directivity. The same radio ICs can be used across the interleaved TX/RX antenna panel, thereby achieving a significant cost advantage in terms of research and development, validation, and chip manufacturing volume.

Advantages of configurations disclosed herein include greater receiver sensitivity, lower interference at receivers caused by transmissions from nearby transmitters (which are now further away), ease of design and manufacture, as well as scalability.

### BRIEF DESCRIPTION OF THE DRAWINGS

A more complete understanding of embodiments described herein, and the attendant advantages and features thereof, will be more readily understood by reference to the following detailed description when considered in conjunction with the accompanying drawings wherein:
FIG. 1 is a block diagram of a transmit panel and a receive panel;
FIGS. 2A and 2B are block diagrams comparing two different TX/RX arrangements;
FIGS. 3A and 3B are block diagrams comparing two different TX/RX arrangements;
FIG. 4 is a flowchart of an example process for grouping antenna elements to mitigate transmit to receive leakage in on-frequency full-duplex systems; and
FIG. 5 is a flowchart of an example process placing transceiver (TRX) integrated circuits (ICs) on a printed circuit board.

### DETAILED DESCRIPTION

Before describing in detail example embodiments, it is noted that the embodiments reside primarily in combinations of apparatus components and processing steps related to antenna array grouping. Accordingly, the system and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

It is also noted that the terms "IC" and "IC chip" are used interchangeably herein.

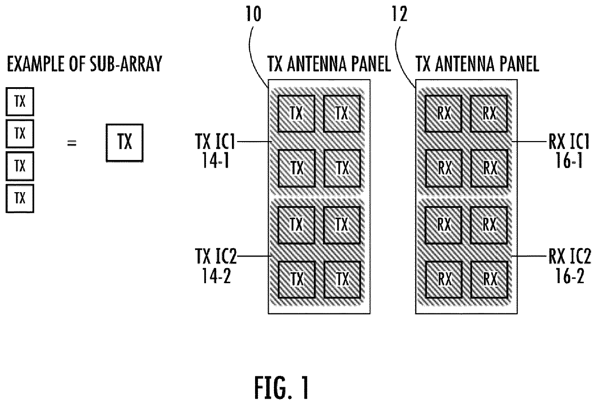

Referring to the drawing figures, where like reference designators refer to like elements, FIG. 1 shows two 2x4 antenna panels, one panel being a transmit antenna panel 10 and the other panel being a receive antenna panel 12. Each panel has two dedicated radio ICs: the TX IC1 14-1 and TX IC2 14-2 on panel 10; and the RX IC 1 16-1 and RX IC2 16-2 on panel 12. The TRX ICs serve 4 antenna elements each. In a traditional system, the distances between the panels 10 and 12 can be large, and thus offer superior antenna isolation between transmission and reception when operated in on-frequency full-duplex mode. Some fundamental drawbacks of this configuration are discussed above. Note that each transmitter fed by TXIC1 can be connected to a sub-array. Combiners or splitters are typically used on the antenna substrate to divide the signal and maintain impedance matching.

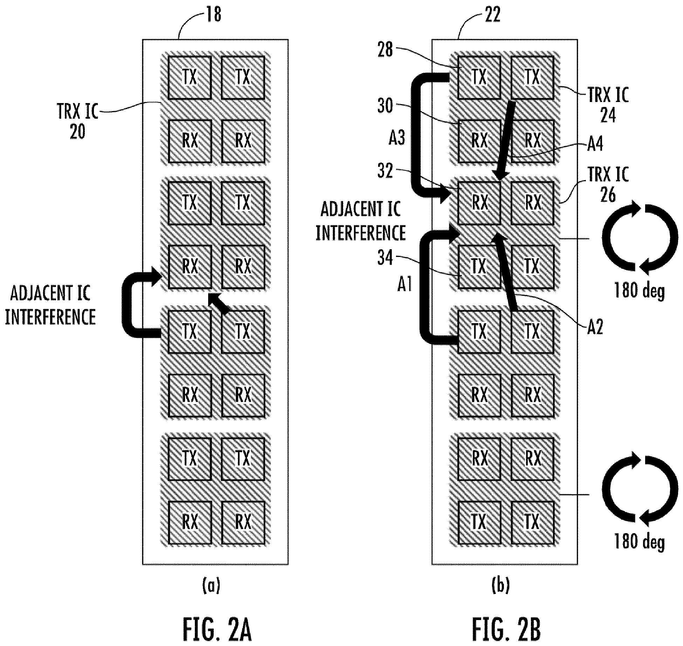

In order to make use of a single transceiver IC, (also referred to as a tile), in accordance with the disclosure herein, the two antenna panels can be merged into one structure as shown in FIG. 2A. FIG. 2A shows a panel 18 that has mounted thereon a transceiver IC 20. Every second row in the new 2x8 panel is either dedicated for TX or RX, and the connected TRX ICs supporting 2 transmitters and 2 receivers may be identical. The normal separation between antenna elements may be half the carrier wavelength, but may vary depending on side lobe requirements and physical constraints. For example, at higher frequencies (smaller wavelength), it may be infeasible to place a transceiver (TRX) behind each antenna. How to connect transmit and receive circuits of a transceiver to antennas is known by persons having ordinary skill in the art and is thus beyond the scope of this disclosure. In such cases, it may be useful to place dummy antennas in the array. This may result in undesirable higher sidelobes. As indicated by the bold arrows in FIG. 2A, there exist two adjacent IC interference paths from TX to RX causing self-interference. This may be difficult to suppress using analog cancelation on-chip and, given the short distance between the TX and nearby RX, the interference level can be severe. Note that, as shown in FIG. 1, in some embodiments, each element labeled TX may include a subarray of transmitters, and each element labeled RX may include a subarray of receivers.

Some embodiments are as shown in FIG. 2B. FIG. 2B shows a panel 22 with transceiver ICs 24, 26. Every other transceiver (TRX) IC 24 (or its connected antennas) is rotated approximately or exactly 180 degrees (or flipped horizontally, or mirrored) with respect to an adjacent TRX IC 26. In other words, approximately 180 degrees can be exactly 180 degrees or substantially 180 degrees. For example, the TRX IC 24 may be rotated through an angle in the range of 175 to 185 degrees in some embodiments. In some embodiments the TRX IC 24 may be rotated through an angle in the range of 170 to 190 degree. In some embodiments the TRX IC 24 may be rotated through an angle in the range of 178 to 182 degrees. In other words, TRX IC 24 may be rotated with respect to the orientation of TRX IC 26. This action does not change the overall footprint, and the antenna panel is still 2x8. However, adjacent IC interference is attenuated as compared with traditional solutions. FIG. 2B shows that the number of nearest adjacent aggressors (A1, A2, A3, A4) is double as compared to the original antenna interleaving layout shown in FIG. 2A. However, at the same time, the distance to the victim RX has also doubled. Since near field power rolls-off as one over distance raised to the fourth or higher, the TX aggressor power reaching the victim RX will be significantly reduced, even though there are more TX aggressors.

Advantages of configurations disclosed herein include greater receiver sensitivity, lower interference at receivers caused by transmissions from nearby transmitters (which are now further away), ease of design and manufacture, as well as scalability, as compared with other arrangements.

Aggressor power may increase by roughly 3dB, whereas the pathloss increases by 6dB and as it rolls off inversely proportional to the squared distance. Thus, a reduction of 3dB compared to the original interleaving layout of FIG. 2A is achieved by the layout of FIG. 2B. It should be noted that the antenna panels 22 may have a different shape, e.g., 8x2, and still benefit from the rotated layout.

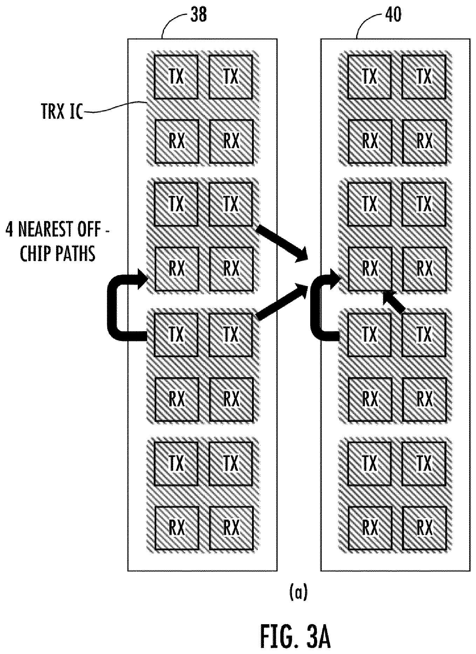

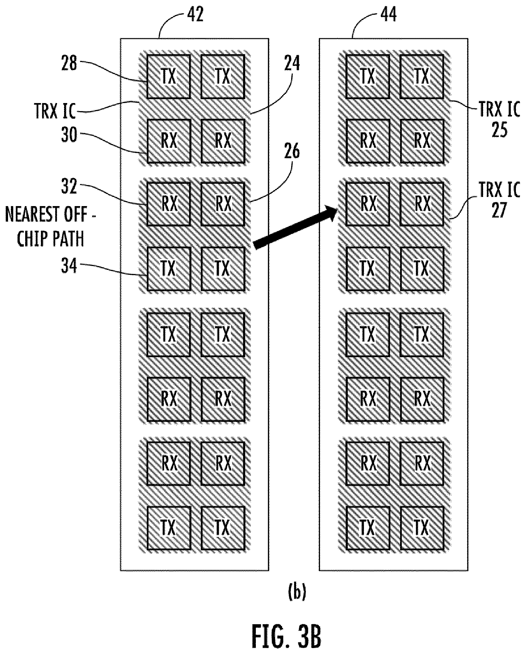

When antenna panels are combined to form larger array structures, e.g., to increase the antenna directivity, the interference reduction effects are still present. An example is illustrated in FIGS. 3A and 3B. In the layout of FIG. 3A, four nearby adjacent IC aggressors on adjacent panels 38 and 40 can be identified. However, when applying the arrangements shown in FIG3B, where the TRX ICs 24 of panel 42, 44 are flipped, rotated, or mirrored with respect to the TRX ICs 26 of panel 42, 44. The number of nearby adjacent IC aggressors is reduced to one, as shown in FIG. 3B. This corresponds to a 75% power reduction, i.e., -6dB, compared to the layout of FIG. 3A. Note that TRX ICs can be designed using any one of a number of semiconductor manufacturing technologies, such as GaAs, InP, GaN, Si, SiGe, or any combination of these. Also, there are many ways to connect ICs with the antenna. In one method, the antenna is integrated on the IC using the topmost metal layer(s). This may give poor antenna performance. Another approach is to design the antenna in the IC package, usually called an "antenna in package" solution. Another approach is to make a large antenna printed circuit board (PCB) and directly mount bare IC dies onto that. One way to do this is to package the ICs, and then mount the ICs on the antenna substrate. Note that the principles disclosed herein with respect to two adjacent panels 42, 44 readily extend to any number of adjacent panels. Also, the principles disclosed herein with respect to two adjacent TRX ICs 24, 26 readily extend to any number of adjacent transceivers ICs.

As is known, printed circuit boards are made of a dielectric material with a copper conductor layer on one or both sides. The dielectric may incorporate glass, ceramic, or other filler for improved electrical and mechanical stability. Antennas can be formed on one or both sides of the laminate or by using multiple layers of laminate materials. When more than one side is used, conductive layers are may be electrically connected by plated through holes (PTHs) in the insulator layer.

The antenna layout obtained by rotating every other radio IC (or its antennas) generates a different antenna pattern compared to an evenly spaced antenna element layout. When alternating between RX and TX for every other row, as in FIG. 2A, the vertical spacing between TX (or RX) elements becomes uniform. In the proposed layout, as seen in FIG. 2B, the spacing is not uniform. However, as the total array size is similar, the directivity is in both cases reduced by -3dB in relation to the maximum aperture for the panel size, i.e., when connecting all elements to either RX or TX. The beam steering control (i.e., time delay or phase shift between antenna elements) should be different for the two layouts (FIG. 2A versus FIG. 2B), but in principle the same main lobe performance can be achieved. Note also that further isolation can be achieved by changing polarization between transmit and receive antenna elements. By changing the polarization between TX and RX antenna elements (or formed sub-arrays), the signal, distortion and noise coupling between these will change. This has an impact on the needed electrical isolation and the electrical cancelation performance between TX and RX to fulfil the overall required system isolation between TX and RX

In operation, it is contemplated that the antenna layout described here can, as a nonlimiting example, be used in a cellular wireless communication system such as a wireless communication system compliant with a 3^{rd} Generation Partnership Project (3GPP) set of standards. Such standards may include, but are not limited to Long Term Evolution (LTE) and New Radio (NR) (also known as 5G). It is further contemplated that the layout of TRX ICs described herein can be used in connection with a 3GPP network node, e.g., a base station, such as a gNB, eNB, etc. Such base stations have communication equipment that enable wireless communications with a plurality of wireless devices. Such communications are over the air on an RF channel via antennas. Antennas of the communications equipment may be connected to the transceiver ICs described herein. However, implementations are not limited to 3GPP-based networks. Further, additional components in the transmission and receive paths, e.g., power amplifiers, filters, etc., are not shown for ease of understanding.

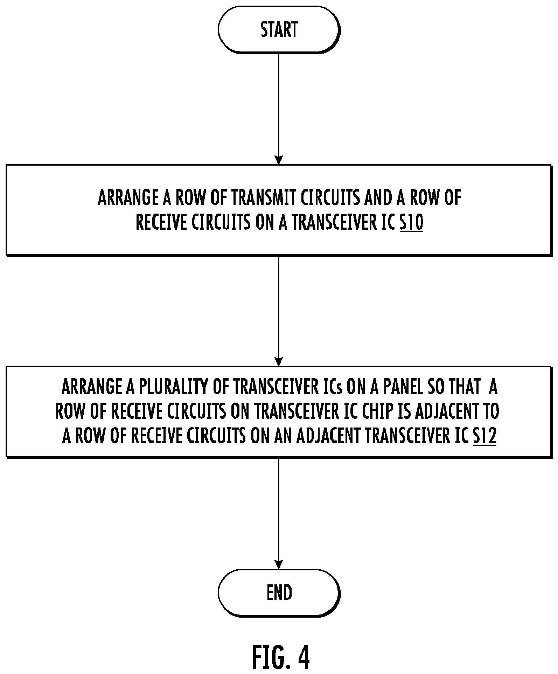

FIG. 4 is a flowchart of an example process for grouping antenna elements to mitigate transmit to receive leakage in on-frequency full-duplex systems. The process includes arranging a row of transmit integrated circuits, ICs, and a row of receive ICs on an IC chip (Block S10). The process further includes arranging a plurality of IC chips on a panel so that a row of receive circuits on one IC chip is adjacent to a row of receive circuits on an adjacent IC chip (Block S12).

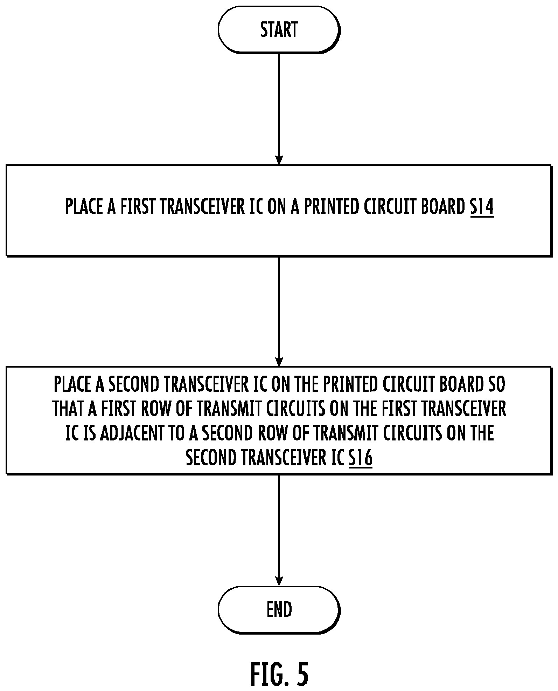

FIG. 5 is a flowchart of an example process for arranging TRX ICs on a printed circuit board. The process includes placing a first TRX IC on a printed circuit board, (Block S14) and placing a second transceiver IC on the printed circuit board so that a first row of transmit circuits on the first transceiver IC is adjacent to a second row of transmit circuits on the second transceiver IC (Block S16).

Thus, in some embodiments, a method to group antenna array elements to mitigate Txto-Rx leakage in on-frequency full-duplex systems is provided. In some embodiments, the Rx and Tx antennas with strongest unwanted coupling are all fed by the same transceiver (TRX) IC and analog cancellation methods can easily be applied to compensate the unwanted leakage. Receive (Rx) and transmit (Tx) antenna elements fed by different TRX ICs are moved further apart from each other in some embodiments, and will therefore have increased isolation and no need for analog cancellation loops between transceiver ICs.

Note that the configurations disclosed herein for orienting adjacent TRX ICs 24, 25, 26, 27 may produce different beam patterns than the beam patterns of conventionally oriented transceiver ICs. This is because the spacing between rows of transmit circuits 28, 34 is non-uniform in the configurations disclosed herein, whereas the spacing between rows of transmit circuits is uniform. However, the total array size in both cases are similar so that the respective directivity is reduced by -3dB in relation to the maximum aperture given the panel size, i.e., when connecting all elements to either RX or TX. The beam steering control (i.e. time delay, or phase shift, between antenna element) will have to be different for the two layouts, but in principle the same main lobe performance can be achieved.

As mentioned, because there is non-uniform spacing of the transmit circuits, a different beam pattern may result as compared to the beam pattern generated with uniform spacing. In particular, exaggerated sidelobes may result, especially for large steering angles. For small steering angles, there can be expected only insignificant differences between beams resulting from non-uniform spacing and from uniform spacing. Also, there may be a variation between an azimuth cut of the beam and an elevation cut of the beam. For example, for the geometry of FIG. 2B or 3B, where the element and subarray placement have a vertical orientation, the beam azimuth is little affected by the non-uniform spacing, whereas the beam elevation may have significant additional sidelobes or sidelobes that are more pronounced.

Because of non-uniform spacing, when a beam is steered away from boresight for example, between -10 and -30 degrees, reduction in beam gain may increase by as much as 2-3dB. This reduction in gain may be offset by the reduction in path loss resulting from shorter distance between the base station and the wireless device(s) to which the beam is steered. For wireless devices on a cell boarder, maximum gain may compensate for the increased path loss between the based station and the wireless devices on the cell boarder. Note that the configurations disclosed herein may eliminate a need for analog cancellation loops between transceiver ICs.

According to one aspect, a communication apparatus to mitigate transmit to receive leakage in on-frequency full-duplex systems having a plurality of antenna elements is provided. The communication apparatus includes a panel 42 having transceiver integrated circuits, ICs 24 and 26. The panel 42 includes a plurality of transceiver integrated circuits, ICs 24 and 26, each transceiver IC 24, 26 having a row of transmit circuits 28, 34 and a row of receive circuits 30, 32, the transceiver ICs 24 and 26 being arranged so that a row of receive circuits 30 on one transceiver IC 24 is adjacent to a row of receive circuits 32 on an adjacent transceiver IC 26.

According to this aspect, in some embodiments, the communication apparatus further comprising a plurality of panels 42, 44, the plurality of panels 42, 44 being arranged side by side so that a row of receive circuits 30 on a transceiver IC 24 on a first panel 42 is aligned with a row of receive circuits 30 on a transceiver IC 25 on a second panel 44. In some embodiments, a plurality of transceiver ICs 24, 26 on the panel 42 are arranged by rotating every other transceiver IC 24, 26 so that rows of receive circuits 30 on one panel 42 are in a same row as a row of receive circuits 30 on an adjacent panel 44. In some embodiments, the rotation is approximately 180 degrees. In some embodiments, a distance between adjacent transceiver ICs 24, 26 is less than a wavelength at a frequency of operation of the plurality of antenna elements. In some embodiments, the plurality of panels 42, 44 are arranged side by side so that a row of receive circuits 30 on a transceiver IC 24 on a first panel 42 is aligned with a row of receive circuits 30 of a transceiver IC 25 on a second panel 44. In some embodiments, a distance between adjacent panels 42 and 44 is less than a wavelength at a frequency of operation of the plurality of antenna elements.

According to yet another aspect, a method for arranging transceiver integrated circuits, ICs, 24, 26 to mitigate transmit to receive leakage in on-frequency full-duplex systems having a plurality of antenna elements is provided. The method includes arranging a row of transmit circuits 28 and a row of receive circuits 30 on a transceiver IC 24; and arranging a plurality of transceiver ICs 24, 26 on a first panel 42 so that a row of receive circuits 30 on one transceiver IC 24 is adjacent to a row of receive circuits 32 on an adjacent transceiver IC 26.

According to this aspect, in some embodiments, the method further includes arranging a plurality of panels 42, 44 side by side so that a row of receive circuits 30 on a transceiver IC 24 on the first panel 42 is aligned with a row of receive circuits 30 on a transceiver IC 25 on a second panel 44. In some embodiments, the method further includes arranging a plurality of panels 42, 44 and arranging the plurality of transceiver ICs 24, 26 on the first panel 42 by rotating every other transceiver IC 24 so that rows of receive circuits 30 on the first panel 42 are in a same row as a row of receive circuits 30 on an adjacent panel 44 of the plurality of panels. In some embodiments, the rotation is approximately 180 degrees. In some embodiments, the method further includes arranging the plurality of panels 42, 44 side by side so that a row of receive circuits 30 on a transceiver IC 24 on a first panel 42 is aligned with a row of receive circuits of a transceiver IC 25 on a second panel 44. In some embodiments, a distance between adjacent panels 42, 44 is less than a wavelength at a frequency of operation of the plurality of antenna elements.

According to another aspect, an array of transceiver integrated circuits, ICs, 24, 26 is configured to be in communication with an array of antenna elements, each transceiver IC 24, 26 having a row of receive circuits 30 and a row of transmit circuits 28, transceiver ICs 24, 26 in the array of transceiver ICs 24, 26 being arranged so that a row of receive circuits 30 on one transceiver IC 24 is adjacent to a row of receive circuits 30 on an adjacent transceiver IC 26.

According to this aspect, in some embodiments, two adjacent transceiver ICs 24, 26 are arranged so that a row of receive circuits 30 on one transceiver IC 24 are more distant to a row of transmit circuits 34 on the other adjacent transceiver IC 26 than to a row of receive circuits on the other adjacent transceiver IC 26. In some embodiments, transceiver ICs 24, 25 are arranged in panels 42, 44 so that a row of receive circuits 30 on one panel 42 is in a same row as a row of receive circuits 30 on an adjacent panel 44. In some embodiments, a distance between adjacent transceiver ICs 24 and 26 is less than a wavelength at a frequency of operation of at least one antenna in communication with one of the adjacent transceiver ICs 24, 26. In some embodiments, a first transceiver IC 24 is rotated with respect to an orientation of a second transceiver IC 26 adjacent to the first transceiver IC 24.

According to yet another aspect, a panel 42 of transceiver integrated circuits, ICs 24 is configured such that each transceiver IC 24 has a row of transmit circuits 28 and a row of receive circuits 30, every other transceiver IC 24 in a plurality of rows of transceiver ICs on the panel 42 being rotated with respect to an adjacent transceiver IC 26 on the panel.

According to this aspect, in some embodiments, any two adjacent transceiver ICs 24, 26 on the panel 42 are arranged so that a row of receive circuits 30 on one transceiver IC 24 are more distant to a row of transmit circuits 34 on the other adjacent transceiver IC 26 than to a row of receive circuits 32 on the other adjacent transceiver IC 26.

According to another aspect, a method of manufacturing a panel of transceiver integrated circuits, ICs, 24 for communication with a plurality of antenna elements is provided. The method includes placing a first transceiver IC 24 on a printed circuit board; and placing a second transceiver IC 26 on the printed circuit board so that a first row of receive circuits on the first transceiver IC 24 is adjacent to a second row of receive circuits on the second transceiver IC 26.

According to this aspect, in some embodiments, the second transceiver IC 26 is placed such that the second transceiver IC 26 is rotated with respect to an orientation of the first transceiver IC 24. In some embodiments, the second transceiver IC 26 is rotated by an angle in the range of 178 to 182 degrees. In some embodiments, the second transceiver IC 26 is rotated by an angle in the range of 170 to 190 degrees. In some embodiments, the second transceiver IC 26 is rotated by 180 degrees. In some embodiments, a distance between the first and second transceiver ICs 24, 26 are positioned to be less than a wavelength apart at a frequency of operation of the plurality of antenna elements.

According to one aspect, a method for grouping antenna elements to mitigate transmit to receive leakage in on-frequency full-duplex systems is provided. The method includes arranging a row of transmit integrated circuits, ICs, 28 and a row of receive circuits 30 on an IC chip 24. The method also includes arranging a plurality of IC chips 24 on a panel 42 so that a row of receive circuits 30 on one IC chip 24 is adjacent to a row of receive circuits 32 on an adjacent IC chip 26.

According to this aspect, in some embodiments, the method further includes, arranging a plurality of panels 42, 44 side by side. In some embodiments, a distance between adjacent IC chips 24, 26 is less than a wavelength at a frequency of operation of the group of antenna elements and a distance between adjacent panels 42, 44 is less than the wavelength. In some embodiments, the IC chips 24, 26 may be much smaller than the area of the antenna panel 42, 44 the IC chips are connected to. In such cases, it is contemplated that the IC chips 24, 26 may be separated by more than a wavelength at a frequency of operation.

According to another aspect, an array of transmit/receive integrated circuits, ICs, chips 24, 25, 26, 27 are arranged to feed a group of antennas. Each IC chip has a row of receive circuits 30, 32 and a row of transmit circuits 28, 34. IC chips in the array are arranged so that a row of receive circuits 30 on one IC chip 24 is adjacent to a row of receive circuits 32 on an adjacent IC chip 26.

According to this aspect, in some embodiments, the IC chips are arranged in panels 42, 44 spaced less than a wavelength apart at a frequency of operation of the group of antennas. In some embodiments, the rows of receive circuits 30 in one panel 42 are in a same row as a row of receive circuits 30 in an adjacent panel 44.

| Abbreviation | Explanation |
|---|---|
| IC | Integrated circuit |
| RX | Receive/receiver |
| TX | Transmit/transmitter |
| TRX | Transceiver |

It will be appreciated by persons skilled in the art that the present embodiments are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A communication apparatus to mitigate transmit to receive leakage in on-frequency full-duplex systems having a plurality of antenna elements, the communication apparatus comprising:
a panel (42) having transceiver integrated circuits, ICs, (24), the panel (42) comprising:
a plurality of transceiver integrated circuits, ICs, (24, 26) each transceiver IC (24, 26) having a row of transmit circuits (28, 34) and a row of receive circuits (30, 32), the transceiver ICs (24, 26) being arranged so that a row of receive circuits (30) on one transceiver IC (24) is adjacent to a row of receive circuits (32) on an adjacent transceiver IC (26).

2. The communication apparatus of Claim 1, further comprising a plurality of panels (42, 44), the plurality of panels (42, 44) being arranged side by side so that a row of receive circuits (30) on a transceiver IC (24) on a first panel (42) is aligned with a row of receive circuits (30) on a transceiver IC (25) on a second panel (44).

3. The communication apparatus of any of Claims 1 and 2, wherein a plurality of transceiver ICs (24) on the panel (42) are arranged by rotating every other transceiver IC (24) so that rows of receive circuits (30) on one panel (42) are in a same row as a row of receive circuits (30) on an adjacent panel (44).

4. The communication apparatus of Claim 3, wherein the rotation is approximately 180 degrees.

5. The communication apparatus of any of Claims 1-4, wherein a distance between adjacent transceiver ICs (24, 26) is less than a wavelength at a frequency of operation of the plurality of antenna elements.

6. The communication apparatus of any of Claims 1-5, wherein a distance between adjacent panels (42, 44) is less than a wavelength at a frequency of operation of the plurality of antenna elements.

7. A method for arranging transceiver integrated circuits, ICs, to mitigate transmit to receive leakage in on-frequency full-duplex systems having a plurality of antenna elements, the method comprising:
arranging a row of transmit circuits (28) and a row of receive circuits (30) on a transceiver IC (24); and
arranging a plurality of transceiver ICs (24, 26) on a first panel (42) so that a row of receive circuits (30) on one transceiver IC (24) is adjacent to a row of receive circuits (32) on an adjacent transceiver IC (26).

8. The method of Claim 7, further comprising arranging a plurality of panels (42, 44) side by side so that a row of receive circuits (30) on a transceiver IC (24) on the first panel (42) is aligned with a row of receive circuits (30) on a transceiver IC (25) on a second panel (44).

9. The method of Claim 7 further comprising arranging a plurality of panels (42, 44) and arranging the plurality of transceiver ICs (24, 26) on the first panel (42) by rotating every other transceiver IC (24) so that rows of receive circuits (30) on the first panel (42) are in a same row as a row of receive circuits (30) on an adjacent panel (44) of the plurality of panels (42, 44).

10. The method of Claim 9, wherein the rotation is approximately 180 degrees.

11. The method of any of Claims 7-10, further arranging the plurality of panels (42, 44) side by side so that a row of receive circuits (30) on a transceiver IC (24) on a first panel (42) is aligned with a row of receive circuits (30) of a transceiver IC (25) on a second panel (44).

12. The method of any of Claims 7-11, wherein a distance between adjacent panels (42, 44) is less than a wavelength at a frequency of operation of the plurality of antenna elements.

13. An array of transceiver integrated circuits, ICs, (24, 26) configured to be in communication with an array of antenna elements, each transceiver IC (24, 26) having a row of receive circuits (30, 32) and a row of transmit circuits (28, 34), transceiver ICs (24, 26) in the array of transceiver ICs being arranged so that a row of receive circuits (30) on one transceiver IC (24) is adjacent to a row of receive circuits (32) on an adjacent transceiver IC (26).

14. The array of transceiver ICs of Claim 13, wherein two adjacent transceiver ICs (24, 26) are arranged so that a row of receive circuits (30 on one transceiver IC (24) are more distant to a row of transmit circuits (34) on the other adjacent transceiver IC (26) than to a row of receive circuits (32) on the other adjacent transceiver IC (26).

15. The array of transceiver ICs of any of Claims 13 and 14, wherein transceiver ICs (24, 25, 26, 27) are arranged in panels (42, 44) so that a row of receive circuits (30, 32) on one panel (42) is in a same row as a row of receive circuits (30, 32) on an adjacent panel (44).

16. The array of transceiver ICs of any of Claims 13-15, wherein a distance between adjacent transceiver ICs (24, 26) is less than a wavelength at a frequency of operation of at least one antenna in communication with one of the adj acent transceiver ICs (24, 26).

17. The array of transceiver ICs of any of Claims 13-16, wherein a first transceiver IC (24) is rotated within a 10 degree range of 180 degrees with respect to an orientation of a second transceiver IC adjacent to the first transceiver IC.

18. A panel (42) of transceiver integrated circuits, ICs, (24, 26) each transceiver IC (24, 26) having a row of transmit circuits (28, 34) and a row of receive circuits (30, 32), every other transceiver IC (24) in a plurality of rows of transceiver ICs (24, 26) on a panel (42) being rotated with respect to an adjacent transceiver IC on the panel (42).

19. The panel (42) of transceiver ICs (24, 26) of Claim 18, wherein any two adj acent transceiver ICs (24, 26) on the panel (42) are arranged so that a row of receive circuits (30) on one transceiver IC (24) are more distant to a row of transmit circuits (34) on the other adj acent transceiver IC (26) than to a row of receive circuits (32) on the other adjacent transceiver IC (26).

20. A method of manufacturing a panel (42) of transceiver integrated circuits, ICs, (24, 26) for communication with a plurality of antenna elements, the method comprising:
placing a first transceiver IC (24) on a printed circuit board; and
placing a second transceiver IC (26) on the printed circuit board so that a first row of receive circuits on the first transceiver IC (24) is adjacent to a second row of receive circuits (32) on the second transceiver IC (26).

21. The method of Claim 20, wherein the second transceiver IC (26) is placed such that the second transceiver IC (26) is rotated with respect to an orientation of the first transceiver IC (24).

22. The method of Claim 21, wherein the second transceiver IC (26) is
- rotated by an angle in the range of 170 to 190 degrees; or
- rotated by an angle in the range of 178 to 182 degrees; or
- rotated by 180 degrees.

## Patentansprüche

1. Kommunikationseinrichtung zum Mindern einer Sende-Empfang-Leckage in Einschaltfrequenz-Vollduplexsystemen mit einer Vielzahl von Antennenelementen, wobei die Kommunikationseinrichtung Folgendes umfasst:
eine Platte (42) mit in einem Sendeempfänger integrierten Schaltungen, ICs, (24), wobei die Platte (42) Folgendes umfasst:
eine Vielzahl von in einem Sendeempfänger integrierten Schaltungen, ICs, (24, 26), wobei jede Sendeempfänger-IC (24, 26) eine Reihe von Sendeschaltungen (28, 34) und eine Reihe von Empfangsschaltungen (30, 32) aufweist, wobei die Sendeempfänger-ICs (24, 26) derart angeordnet sind, dass sich eine Reihe von Empfangsschaltungen (30) auf einer Sendeempfänger-IC (24) benachbart zu einer Reihe von Empfangsschaltungen (32) auf einer benachbarten Sendeempfänger-IC (26) befindet.

2. Kommunikationseinrichtung nach Anspruch 1, ferner umfassend eine Vielzahl von Platten (42, 44), wobei die Vielzahl von Platten (42, 44) nebeneinander angeordnet ist, sodass eine Reihe von Empfangsschaltungen (30) auf einer Sendeempfänger-IC (24) auf einer ersten Platte (42) an einer Reihe von Empfangsschaltungen (30) auf einer Sendeempfänger-IC (25) auf einer zweiten Platte (44) ausgerichtet ist.

3. Kommunikationseinrichtung nach einem der Ansprüche 1 und 2, wobei eine Vielzahl von Sendeempfänger-ICs (24) auf der Platte (42) durch Drehen jeder zweiten Sendeempfänger-IC (24) derart, dass sich Reihen von Empfangsschaltungen (30) auf einer Platte (42) in einer gleichen Reihe wie eine Reihe von Empfangsschaltungen (30) auf einer benachbarten Platte (44) befinden, angeordnet wird.

4. Kommunikationseinrichtung nach Anspruch 3, wobei die Drehung ungefähr 180 Grad beträgt.

5. Kommunikationseinrichtung nach einem der Ansprüche 1-4, wobei ein Abstand zwischen benachbarten Sendeempfänger-ICs (24, 26) geringer ist als eine Wellenlänge bei einer Betriebsfrequenz der Vielzahl von Antennenelementen.

6. Kommunikationseinrichtung nach einem der Ansprüche 1-5, wobei ein Abstand zwischen benachbarten Platten (42, 44) geringer ist als eine Wellenlänge bei einer Betriebsfrequenz der Vielzahl von Antennenelementen.

7. Verfahren zum Anordnen von in einem Sendeempfänger integrierten Schaltungen, ICs, zum Mindern einer Sende-Empfang-Leckage in Einschaltfrequenz-Vollduplexsystemen mit einer Vielzahl von Antennenelementen, wobei das Verfahren Folgendes umfasst:
Anordnen einer Reihe von Sendeschaltungen (28) und einer Reihe von Empfangsschaltungen (30) auf einer Sendeempfänger-IC (24); und
Anordnen einer Vielzahl von Sendeempfänger-ICs (24, 26) auf einer ersten Platte (42), sodass sich eine Reihe von Empfangsschaltungen (30) auf einer Sendeempfänger-IC (24) benachbart zu einer Reihe von Empfangsschaltungen (32) auf einer benachbarten Sendeempfänger-IC (26) befindet.

8. Verfahren nach Anspruch 7, ferner umfassend Anordnen einer Vielzahl von Platten (42, 44) nebeneinander, sodass eine Reihe von Empfangsschaltungen (30) auf einer Sendeempfänger-IC (24) auf der ersten Platte (42) an einer Reihe von Empfangsschaltungen (30) auf einer Sendeempfänger-IC (25) auf einer zweiten Platte (44) ausgerichtet ist.

9. Verfahren nach Anspruch 7, ferner umfassend Anordnen einer Vielzahl von Platten (42, 44) und Anordnen der Vielzahl von Sendeempfänger-ICs (24, 26) auf der ersten Platte (42) durch Drehen jeder zweiten Sendeempfänger-IC (24) derart, dass sich Reihen von Empfangsschaltungen (30) auf der ersten Platte (42) in einer gleichen Reihe wie eine Reihe von Empfangsschaltungen (30) auf einer benachbarten Platte (44) der Vielzahl von Platten (42, 44) befinden.

10. Verfahren nach Anspruch 9, wobei die Drehung ungefähr 180 Grad beträgt.

11. Verfahren nach einem der Ansprüche 7-10, ferner umfassend Anordnen der Vielzahl von Platten (42, 44) nebeneinander, sodass eine Reihe von Empfangsschaltungen (30) auf einer Sendeempfänger-IC (24) auf einer ersten Platte (42) an einer Reihe von Empfangsschaltungen (30) einer Sendeempfänger-IC (25) auf einer zweiten Platte (44) ausgerichtet ist.

12. Verfahren nach einem der Ansprüche 7-11, wobei ein Abstand zwischen benachbarten Platten (42, 44) geringer ist als eine Wellenlänge bei einer Betriebsfrequenz der Vielzahl von Antennenelementen.

13. Anordnung von in einem Sendeempfänger integrierten Schaltungen, ICs, (24, 26), die dazu konfiguriert ist, in Kommunikation mit einer Anordnung von Antennenelementen zu stehen, wobei jede Sendeempfänger-IC (24, 26) eine Reihe von Empfangsschaltungen (30, 32) und eine Reihe von Sendeschaltungen (28, 34) aufweist, wobei die Sendeempfänger-ICs (24, 26) in der Anordnung von Sendeempfänger-ICs derart angeordnet sind, dass sich eine Reihe von Empfangsschaltungen (30) auf einer Sendeempfänger-IC (24) benachbart zu einer Reihe von Empfangsschaltungen (32) auf einer benachbarten Sendeempfänger-IC (26) befindet.

14. Anordnung von Sendeempfänger-ICs nach Anspruch 13, wobei zwei benachbarte Sendeempfänger-ICs (24, 26) derart angeordnet sind, dass eine Reihe von Empfangsschaltungen (30) auf einer Sendeempfänger-IC (24) weiter von einer Reihe von Sendeschaltungen (34) auf der anderen benachbarten Sendeempfänger-IC (26) als eine Reihe von Empfangsschaltungen (32) auf der anderen benachbarten Sendeempfänger-IC (26) entfernt ist.

15. Anordnung von Sendeempfänger-ICs nach einem der Ansprüche 13 und 14, wobei Sendeempfänger-ICs (24, 25, 26, 27) derart in Platten (42, 44) angeordnet sind, dass sich eine Reihe von Empfangsschaltungen (30, 32) auf einer Platte (42) in einer gleichen Reihe wie eine Reihe von Empfangsschaltungen (30, 32) auf einer benachbarten Platte (44) befindet.

16. Anordnung von Sendeempfänger-ICs nach einem der Ansprüche 13-15, wobei ein Abstand zwischen benachbarten Sendeempfänger-ICs (24, 26) geringer ist als eine Wellenlänge bei einer Betriebsfrequenz von mindestens einer Antenne in Kommunikation mit einer der benachbarten Sendeempfänger-ICs (24, 26).

17. Anordnung von Sendeempfänger-ICs nach einem der Ansprüche 13-16, wobei eine erste Sendeempfänger-IC (24) in einem 10-Grad-Bereich von 180 Grad in Bezug auf eine Ausrichtung einer zweiten Sendeempfänger-IC benachbart zu der ersten Sendeempfänger-IC gedreht ist.

18. Platte (42) von in einem Sendeempfänger integrierten Schaltungen, ICs, (24, 26), wobei jede Sendeempfänger-IC (24, 26) eine Reihe von Sendeschaltungen (28, 34) und eine Reihe von Empfangsschaltungen (30, 32) aufweist, wobei jede zweite Sendeempfänger-IC (24) in einer Vielzahl von Reihen von Sendeempfänger-ICs (24, 26) auf einer Platte (42) in Bezug auf eine benachbarte Sendeempfänger-IC auf der Platte (42) gedreht ist.

19. Platte (42) von Sendeempfänger-ICs (24, 26) nach Anspruch 18, wobei zwei beliebige benachbarte Sendeempfänger-ICs (24, 26) auf der Platte (42) derart angeordnet sind, dass eine Reihe von Empfangsschaltungen (30) auf einer Sendeempfänger-IC (24) weiter von einer Reihe von Sendeschaltungen (34) auf der anderen benachbarten Sendeempfänger-IC (26) als eine Reihe von Empfangsschaltungen (32) auf der anderen benachbarten Sendeempfänger-IC (26) entfernt ist.

20. Verfahren zum Herstellen einer Platte (42) von in einem Sendeempfänger integrierten Schaltungen, ICs, (24, 26) zur Kommunikation mit einer Vielzahl von Antennenelementen, wobei das Verfahren Folgendes umfasst:
Platzieren einer ersten Sendeempfänger-IC (24) auf einer Leiterplatte; und
Platzieren einer zweiten Sendeempfänger-IC (26) auf der Leiterplatte, sodass sich eine erste Reihe von Empfangsschaltungen auf der ersten Sendeempfänger-IC (24) benachbart zu einer zweiten Reihe von Empfangsschaltungen (32) auf der zweiten Sendeempfänger-IC (26) befindet.

21. Verfahren nach Anspruch 20, wobei die zweite Sendeempfänger-IC (26) derart platziert wird, dass die zweite Sendeempfänger-IC (26) in Bezug auf eine Ausrichtung der ersten Sendeempfänger-IC (24) gedreht wird.

22. Verfahren nach Anspruch 21, wobei die zweite Sendeempfänger-IC (26)
- um einen Winkel im Bereich von 170 bis 190 Grad gedreht wird; oder
- um einen Winkel im Bereich von 178 bis 182 Grad gedreht wird; oder
- um 180 Grad gedreht wird.

## Revendications

1. Appareil de communication pour atténuer les fuites d'émission-réception dans des systèmes duplex intégral en fréquence comprenant une pluralité d'éléments d'antenne, l'appareil de communication comprenant :
un panneau (42) comportant des circuits émetteur-récepteur intégrés (CI) (24), le panneau (42) comprenant :
une pluralité de circuits émetteur-récepteur intégrés (CI) (24, 26), chaque circuit émetteur-récepteur intégré (24, 26) ayant une rangée de circuits de transmission (28, 34) et une rangée de circuits de réception (30, 32), les circuits émetteur-récepteur intégrés (24, 26) étant agencés de telle sorte qu'une rangée de circuits de réception (30) sur un circuit émetteur-récepteur intégré (24) soit adjacente à une rangée de circuits de réception (32) sur un circuit émetteur-récepteur intégré adjacent (26).

2. Appareil de communication selon la revendication 1, comprenant en outre une pluralité de panneaux (42, 44), la pluralité de panneaux (42, 44) étant agencés côte à côte de sorte qu'une rangée de circuits de réception (30) sur un circuit émetteur-récepteur intégré (24) sur un premier panneau (42) soit aligné avec une rangée de circuits de réception (30) sur un circuit émetteur-récepteur intégré (25) sur un second panneau (44) .

3. Appareil de communication selon l'une quelconque des revendications 1 et 2, dans lequel une pluralité de circuits émetteur-récepteur intégrés (24) sur le panneau (42) sont agencés en faisant tourner un circuit émetteur-récepteur intégré (24) sur deux de sorte que des rangées de circuits de réception (30) sur un panneau (42) se trouvent dans une même rangée qu'une rangée de circuits de réception (30) sur un panneau adjacent (44) .

4. Appareil de communication selon la revendication 3, dans lequel la rotation est d'environ 180 degrés.

5. Appareil de communication selon l'une quelconque des revendications 1 à 4, dans lequel une distance entre des circuits émetteur-récepteur intégrés adjacents (24, 26) est inférieure à une longueur d'onde à une fréquence de fonctionnement de la pluralité d'éléments d'antenne.

6. Appareil de communication selon l'une quelconque des revendications 1 à 5, dans lequel une distance entre des panneaux adjacents (42, 44) est inférieure à une longueur d'onde à une fréquence de fonctionnement de la pluralité d'éléments d'antenne.

7. Procédé pour agencer des circuits émetteur-récepteur intégrés (CI) pour atténuer les fuites d'émission-réception dans des systèmes duplex intégral en fréquence comportant une pluralité d'éléments d'antenne, le procédé comprenant :
l'agencement d'une rangée de circuits de transmission (28) et d'une rangée de circuits de réception (30) sur un circuit émetteur-récepteur intégré (24) ; et
l'agencement d'une pluralité de circuits émetteur-récepteur intégrés (24, 26) sur un premier panneau (42) de telle sorte qu'une rangée de circuits de réception (30) sur un circuit émetteur-récepteur intégré (24) soit adjacente à une rangée de circuits de réception (32) sur un circuit émetteur-récepteur intégré adjacent (CI) (26).

8. Procédé selon la revendication 7, comprenant en outre l'agencement d'une pluralité de panneaux (42, 44) côte à côte de sorte qu'une rangée de circuits de réception (30) sur un circuit émetteur-récepteur intégré (24) sur le premier panneau (42) soit alignée avec une rangée de circuits de réception (30) sur un circuit émetteur-récepteur intégré (25) sur un second panneau (44).

9. Procédé selon la revendication 7, comprenant en outre l'agencement d'une pluralité de panneaux (42, 44) et l'agencement de la pluralité de circuits émetteur-récepteur intégrés (24, 26) sur le premier panneau (42) en faisant tourner un circuit émetteur-récepteur intégré (24) sur deux de sorte que les rangées des circuits de réception (30) sur le premier panneau (42) sont dans une même rangée qu'une rangée de circuits de réception (30) sur un panneau adjacent (44) de la pluralité de panneaux (42, 44).

10. Procédé selon la revendication 9, dans lequel la rotation est d'environ 180 degrés.

11. Procédé selon l'une quelconque des revendications 7 à 10, agençant en outre la pluralité de panneaux (42, 44) côte à côte de sorte qu'une rangée de circuits de réception (30) sur un circuit émetteur-récepteur intégré (24) sur un premier panneau (42) soit aligné avec une rangée de circuits de réception (30) d'un circuit émetteur-récepteur intégré (25) sur un second panneau (44).

12. Procédé selon l'une quelconque des revendications 7 à 11, dans lequel une distance entre des panneaux adjacents (42, 44) est inférieure à une longueur d'onde à une fréquence de fonctionnement de la pluralité d'éléments d'antenne.

13. Réseau de circuits émetteur-récepteur intégrés (CI) (24, 26) configuré pour être en communication avec un réseau d'éléments d'antenne, chaque circuit émetteur-récepteur intégré (24, 26) ayant une rangée de circuits de réception (30, 32) et une rangée de circuits de transmission (28, 34), les circuits émetteur-récepteur intégrés (24, 26) dans le réseau de circuits émetteur-récepteur intégrés étant agencés de telle sorte qu'une rangée de circuits de réception (30) sur un circuit émetteur-récepteur intégré (24) soit adjacente à une rangée de circuits de réception (32) sur un circuit émetteur-récepteur intégré adjacent (26).

14. Réseau de circuits émetteur-récepteur intégrés selon la revendication 13, dans lequel deux circuits émetteur-récepteur intégrés adjacents (24, 26) sont agencés de telle sorte qu'une rangée de circuits de réception (30) sur un circuit émetteur-récepteur intégré (24) soit plus éloignée d'une rangée de circuits de transmission (34) sur l'autre circuit émetteur-récepteur intégré adjacent (26) qu'à une rangée de circuits de réception (32) sur l'autre circuit émetteur-récepteur intégré adjacent (26).

15. Réseau de circuits émetteur-récepteur intégrés selon l'une quelconque des revendications 13 et 14, dans lequel les circuits émetteur-récepteur intégrés (24, 25, 26, 27) sont agencés en panneaux (42, 44) de telle sorte qu'une rangée de circuits de réception (30, 32) sur un panneau (42) se trouve dans une même rangée qu'une rangée de circuits de réception (30, 32) sur un panneau adjacent (44).

16. Réseau de circuits émetteur-récepteur intégrés selon l'une quelconque des revendications 13 à 15, dans lequel une distance entre des circuits émetteur-récepteur intégrés adjacents (24, 26) est inférieure à une longueur d'onde à une fréquence de fonctionnement d'au moins une antenne en communication avec l'un des circuits émetteur-récepteur intégrés adjacents (24, 26).

17. Réseau de circuits émetteur-récepteur intégrés selon l'une quelconque des revendications 13 à 16, dans lequel un premier circuit émetteur-récepteur intégré (24) tourne dans une plage de 10 degrés de 180 degrés par rapport à une orientation d'un second circuit émetteur-récepteur intégré adjacent au premier circuit émetteur-récepteur intégré.

18. Panneau (42) de circuits émetteur-récepteur intégrés (CI) (24, 26), chaque circuit émetteur-récepteur intégré (24, 26) ayant une rangée de circuits de transmission (28, 34) et une rangée de circuits de réception (30, 32), un circuit émetteur-récepteur intégré (24) sur deux dans une pluralité de rangées de circuits émetteur-récepteur intégrés (24, 26) sur un panneau (42) tournant par rapport à un circuit émetteur-récepteur intégré adjacent sur le panneau (42).

19. Panneau (42) de circuits émetteur-récepteur intégrés (24, 26) selon la revendication 18, dans lequel deux circuits émetteur-récepteur intégrés adjacents (24, 26) quelconques sur le panneau (42) sont agencés de telle sorte qu'une rangée de circuits de réception (30) sur un circuit émetteur-récepteur intégré (24) sont plus éloignés d'une rangée de circuits de transmission (34) sur l'autre circuit émetteur-récepteur intégré adjacent (26) que d'une rangée de circuits de réception (32) sur l'autre circuit émetteur-récepteur intégré adjacent (26).

20. Procédé de fabrication d'un panneau (42) de circuits émetteur-récepteur intégrés (IC) (24, 26) pour communication avec une pluralité d'éléments d'antenne, le procédé comprenant :
le placement d'un premier circuit émetteur-récepteur intégré (24) sur une carte de circuit imprimé ; et
le placement d'un second circuit émetteur-récepteur intégré (26) sur la carte de circuit imprimé de sorte qu'une première rangée de circuits de réception sur le premier circuit émetteur-récepteur intégré (24) soit adjacente à une seconde rangée de circuits de réception (32) sur le second circuit émetteur-récepteur intégré (26).

21. Procédé selon la revendication 20, dans lequel le second circuit émetteur-récepteur intégré (26) est placé de telle sorte que le second circuit émetteur-récepteur intégré (26) tourne par rapport à une orientation du premier circuit émetteur-récepteur intégré (24).

22. Procédé selon la revendication 21, dans lequel le second circuit émetteur-récepteur intégré (26) est
- pivoté d'un angle compris entre 170 et 190 degrés ; ou
- pivoté d'un angle compris entre 178 et 182 degrés ; ou
- pivoté de 180 degrés.
